## Europäisches Patentamt

## European Patent Office

## Office européen des brevets

(11) Veröffentlichungsnummer: **0 045 929**
**B1**

(12) **EUROPÄISCHE PATENTSCHRIFT**

(45) Veröffentlichungstag der Patentschrift:
**13.04.83**

(51) Int. Cl.³: **B 01 D 53/04**, B 01 J 20/34

(21) Anmeldenummer: **81106077.1**

(22) Anmeldetag: **04.08.81**

(54) Verfahren und Vorrichtung zum Regenerieren eines Adsorbers.

(30) Priorität: **12.08.80 DE 3030474**

(43) Veröffentlichungstag der Anmeldung:
**17.02.82 Patentblatt 82/7**

(45) Bekanntmachung des Hinweises auf die Patenterteilung:
**13.04.83 Patentblatt 83/15**

(84) Benannte Vertragsstaaten:
**AT BE DE FR GB IT NL**

(56) Entgegenhaltungen:
**FR-A-2 097 991**

(73) Patentinhaber: **Linde Aktiengesellschaft,
Abraham-Lincoln-Strasse 21, D-6200 Wiesbaden (DE)**

(72) Erfinder: **Rohde, Wilhelm, Forstenrieder-Allee 20,
D-8000 München 71 (DE)**

(74) Vertreter: **Schaefer, Gerhard, Dr., Linde
Aktiengesellschaft Zentrale Patentabteilung,
D-8023 Höllriegelskreuth (DE)**

BUNDESDRUCKEREI BERLIN

## Verfahren und Vorrichtung zum Regenerieren eines Adsorbers

Die Erfindung betrifft ein Verfahren zum Regenerieren eines abwechselnd von Rohgas und angewärmtem Regeneriergas durchströmten Adsorbers mit in einem Behälter angeordnetem Adsorptionsmittel, bei welchem Verfahren das Regeneriergas über das beladene Adsorptionsmittel geleitet wird, sowie einen Adsorber zur Durchführung des Verfahrens.

Adsorber dienen zur selektiven Entfernung einer oder mehrerer Komponenten aus einem zu reinigenden Rohgas. Hierzu wird das Rohgas über ein Adsorptionsmittel geleitet, durch das diese Komponenten adsorbiert werden. Anschließend tritt das von diesen Komponenten befreite Gasgemisch aus dem Adsorber aus. Nach einer gewissen Zeit, die von den herrschenden Bedingungen, wie Druck, Temperatur, Art und Konzentration der Verunreinigungen, sowie Adsorptionsmittel abhängt, ist das Adsorptionsmittel beladen und damit nicht mehr in der Lage, weiteres Gas zu adsorbieren. Nun wird die Zufuhr des Rohgases zum Adsorber abgeschaltet und ein Regeneriergas über das Adsorptionsmittel geleitet, welches die adsorbierten Bestandteile aufnimmt und aus dem Adsorber austrägt. Um einen kontinuierlichen Betrieb zu gewährleisten, werden Adsorber zumeist paarweise betrieben, wobei immer einer der Adsorber beladen und der andere regeneriert wird. Als Beispiel für ein solches Verfahren sei stellvertretend für eine Vielzahl von technischen Anwendungsmöglichkeiten ein Verfahren zur adsorptiven Entfernung von Feuchtigkeit und Kohlendioxid aus Luft angeführt.

In vielen Fällen ist die Menge des zur Verfügung stehenden Regeneriergases beschränkt. Um dennoch eine brauchbare Regenerierung des Adsorptionsmittels zu erreichen, wird das Regeneriergas angewärmt. Die Höhe der Temperatur hängt neben anderen Faktoren auch von der Art der zu entfernenden Bestandteile aus dem Rohgas ab. Es hat sich jedoch gezeigt, daß sich aufgrund der relativ großen Wärmekapazität des das Adsorptionsmittel enthaltenden Behälters ein Temperaturgradient über den Querschnitt des Adsorptionsmittels einstellt, wobei sich das Regeneriergas im Bereich der Behälterwand nahezu auf Umgebungstemperatur befindet und nur zur Behältermitte hin seine größte Temperatur erreicht. Dieser Effekt führt dazu, daß in den Randbereichen nur eine geringfügige oder zumindest eine unzureichende Regenerierung des Adsorptionsmittels stattfindet.

Es ist daher bereits vorgeschlagen worden, die beschriebenen negativen Auswirkungen des Behälters, der je nach den auftretenden Gasdrücken und den statischen Belastungen ausreichend druckstabil gebaut sein muß und damit eine große Wärmekapazität darstellt, dadurch zu umgehen, daß im Behälterinneren mit Abstand zur Behälterwand ein dünnwandiger Innenbehälter von geringer Wärmekapazität angeordnet ist. Der Innenbehälter ist auf einer Seite dicht mit dem Außenbehälter verbunden, während er auf der anderen Seite Öffnungen aufweist, die eine Verbindung zwischen dem das Adsorptionsmittel enthaltenden Behälterinnenraum und dem Zwischenraum zwischen Innenbehälter und Außenbehälter herstellen. Mit dieser Anordnung ist gewährleistet, daß im Behälterinnenraum und im Zwischenraum im wesentlichen immer derselbe Druck herrscht und der Innenbehälter daher weitgehend drucklos ist. Während also der Druck im Behälter weiterhin auf dem dickwandigen, stabilen Außenbehälter lastet, ist das Adsorptionsmittel von dem dünnwandigen Innenbehälter umgeben, der eine weitaus geringere Wärmekapazität besitzt. Einen Adsorber dieser Art zeigt die US-Patentschrift 2 083 732.

Es hat sich jedoch gezeigt, daß derartige Adsorber eine Reihe entscheidender Nachteile aufweisen. Zum einen ist es mit sehr großem Aufwand verbunden, den Innenbehälter absolut dicht mit dem Außenbehälter zu verbinden. Bereits die kleinste undichte Stelle führt dazu, daß ein Teil des zu reinigenden Gases über die Druckausgleichsöffnungen und den Zwischenraum am Adsorptionsmittel vorbeiströmen kann. Zum anderen führen thermische Spannungen aufgrund der Temperaturunterschiede zwischen hoher Regeneriergastemperatur und niedriger Betriebstemperatur oder plötzlich auftretende Druckschwankungen aufgrund von Fehlschaltungen bei Versagen der Schaltautomatik zu Beschädigungen des Innenbehälters.

Der vorliegenden Erfindung liegt daher die Aufgabe zugrunde, ein Verfahren zum Regenerieren eines Adsorbers zu entwickeln, das eine optimale Regenerierung des gesamten Adsorptionsmittels gewährleistet und mit dem gleichzeitig der apparative Aufwand reduziert und die Betriebssicherheit erhöht wird.

Diese Aufgabe wird erfindungsgemäß dadurch gelöst, daß im Adsorptionsmittel das Verhältnis der Durchsatzmengen von Regeneriergas zu Rohgas im Bereich der Behälterwand größer als im übrigen Bereich eingestellt wird.

Mit dem Erfindungsgegenstand wird eine Randzone geschaffen, in der dieses Verhältnis größer als im übrigen Adsorber ist. Je größer die Regeneriergasmenge im Verhältnis zur Rohgasmenge ist, um so niedriger kann die Regeneriergastemperatur sein. Auch wenn sich das Regeneriergas im Bereich der Behälterwand stark abkühlt, wird das Adsorptionsmittel dort dennoch in ausreichendem Maße regeneriert.

Durch das erfindungsgemäße Verfahren ist es möglich, auf den aufwendigen und störanfälligen Innenbehälter zu verzichten. Dennoch ist eine sichere Regenerierung des Adsorptionsmittels gewährleistet.

Bei einer vorteilhaften Ausgestaltung des erfindungsgemäßen Verfahrens wird die Menge des über das im Bereich der Behälterwand befindliche Adsorptionsmittel geleiteten Rohgases verringert.

Es ist von Vorteil, gemäß einer weiteren Ausführungsform des Erfindungsgegenstandes einen Teil des Regeneriergases getrennt vom restlichen Regeneriergas dem im Bereich der Behälterwand befindlichen Adsorptionsmittel zuzuführen oder von dem im Bereich der Behälterwand befindlichen Adsorptionsmittel abzuführen.

Es ist von Vorteil, wenn gemäß einer bevorzugten Ausführungsform des Erfindungsgegenstandes das Mengenverhältnis Regeneriergas zu Rohgas im Bereich der Behälterwand mindestens zwei beträgt. Unter Rohgasmenge ist hier die effektive Menge zu verstehen.

Ein Adsorber zur Durchführung des erfindungsgemäßen Verfahrens umfaßt das in einem Behälter angeordnete Adsorptionsmittel und Einrichtungen zur Zu- und Abführung von Rohgas und Regeneriergas, und ist gekennzeichnet durch eine im Bereich der Behälterwand angeordnete Abschottung, die das im Bereich der Behälterwand befindliche von dem übrigen Adsorptionsmittel abtrennt, und die in Strömungsrichtung der Gase an der einen Seite offen und an der anderen Seite zumindest annähernd verschlossen ist, wobei in dem abgeschotteten Raum eine zusätzliche Zu- oder Abführungseinrichtung für Regeneriergas vorhanden ist.

Mit dieser Anordnung wird erreicht, daß durch das innerhalb der Abschottung angeordnete Adsorptionsmittel eine weitaus geringere Menge des Rohgases als durch das übrige Adsorptionsmittel strömt. Es ist jedoch keineswegs erforderlich, daß die Abschottung auf der einen Seite vollkommen dicht ist, da der abgeschottete Raum mit Adsorptionsmittel gefüllt ist und durchströmendes Gas demzufolge auch in diesem Bereich adsorptiv gereinigt wird. Es muß lediglich darauf geachtet werden, daß pro Flächeneinheit des Adsorptionsmittels weniger Rohgas durch den abgeschotteten Raum als durch den übrigen Adsorber strömt, damit im Bereich der Behälterwand das Verhältnis Regeneriergas zu Rohgas vergrößert wird. Dies läßt sich aber ohne besonderen Aufwand, beispielsweise durch punktweises Anschweißen einer Schottwand an der Behälterwand, erreichen. Die Schottwand kann sehr dünn ausgeführt sein, da auf beiden Seiten im wesentlichen derselbe Druck herrscht. Sie besitzt daher eine sehr geringe Wärmekapazität.

Beim Regenerieren wird ein Teil des Regeneriergases über die üblichen Zuführungseinrichtungen zugeführt, der restliche Teil wird über die zusätzliche Zuführungseinrichtung direkt in den abgeschotteten Raum geleitet bzw. aus diesem abgeführt. Innerhalb und außerhalb der Abschottung kann somit pro Flächeneinheit des Adsorptionsmittels dieselbe Regeneriergasmenge eingestellt werden. Da aber erfindungsgemäß innerhalb der Abschottung eine wesentlich geringere Menge an Rohgas durchgeführt worden war, ist dort das Verhältnis Regeneriergas zu Rohgas weitaus günstiger. Infolgedessen ist es für die Qualität der Regenerierung unschädlich, wenn sich das Regeneriergas an der Behälterwand abkühlt. Andererseits erfährt das jenseits der Abschottung strömende Regeneriergas wegen der geringen Wärmekapazität der Wand der Schottung eine nur geringfügige Abkühlung.

Bei einer bevorzugten Ausführungsform des Erfindungsgegenstandes ist eine Schottwand mit ihrem oberen Rand oberhalb des Adsorptionsmittels mit der Behälterwand und mit ihrem unteren Rand mit einem Rost, auf dem das Adsorptionsmittel ruht, verbunden. Eine zusätzliche Zuführungseinrichtung für Regeneriergas mündet in diesem Fall oberhalb des Adsorptionsmittels, aber unterhalb der Befestigungslinie für die Schottwand an der Außenwand.

Bei einer anderen bevorzugten Ausführungsform des Erfindungsgegenstandes ist die Schottwand unterhalb des Adsorptionsmittels mit der Behälterwand verbunden und reicht bis zum oberen Rand des Adsorptionsmittels. Hierbei mündet eine Abführungseinrichtung für das Regeneriergas zwischen dem unteren Rand des Adsorptionsmittels, aber oberhalb der Befestigungslinie für die Schottwand.

Die Erfindung sowie weitere Einzelheiten der Erfindung werden anhand von schematisch dargestellten Ausführungsbeispielen näher erläutert.

Hierbei zeigen:

Figur 1 ein Schaltschema mit einem Paar erfindungsgemäßer Adsorber,

Figur 2 einen erfindungsgemäßen Adsorber,

Figur 3 eine andere Ausführungsform eines erfindungsgemäßen Adsorbers.

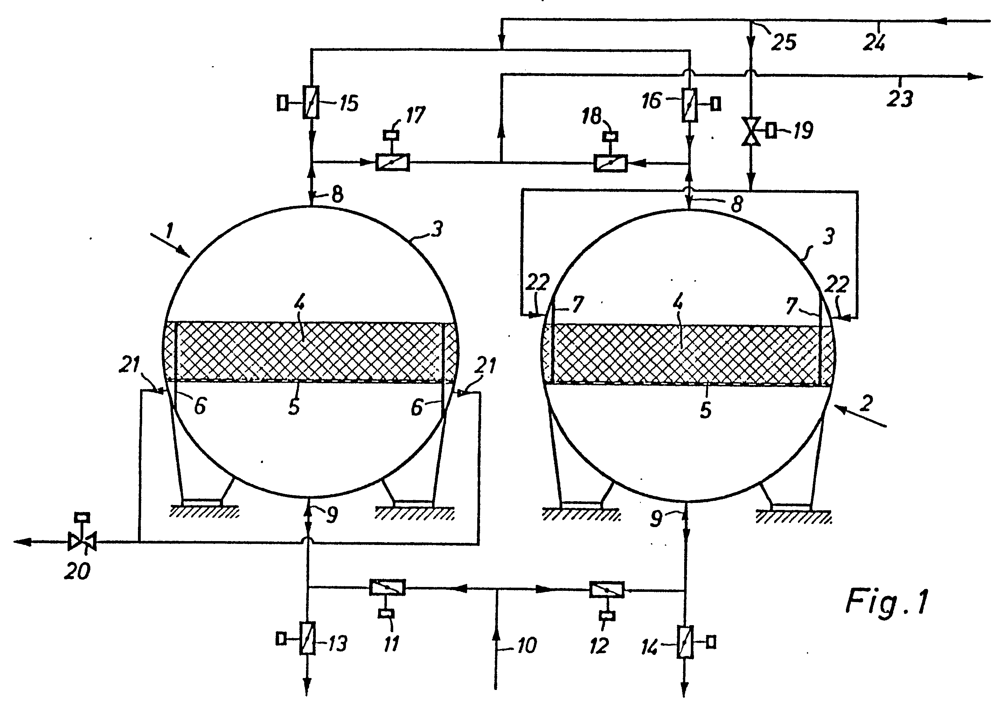

Die in Figur 1 schematisch dargestellte Anlage dient beispielsweise zur adsorptiven Reinigung von Luft als Rohgas, wobei insbesondere Feuchtigkeit und Kohlendioxid aus der Luft entfernt werden.

Mit den Bezugsziffern 1 und 2 ist ein Paar von periodisch umschaltbaren, abwechselnd von Luft und Regeneriergas durchströmten Adsorbern bezeichnet. Jeder der Adsorber 1, 2 enthält ein Adsorptionsmittel 4, beispielsweise eine Molsiebschüttung, das in einem Behälter 3 angeordnet ist. Das Adsorptionsmittel ruht auf einem gasdurchlässigen Rost 5. Erfindungsgemäß ist im Bereich der Behälterwand jeweils eine durch eine Schottwand 6 bzw. 7 gebildete Abschottung vorgesehen, die das im Bereich der Behälterwand angeordnete Adsorptionsmittel von dem übrigen Adsorptionsmittel abtrennt. Anhand der Adsorber 1 und 2 sind dabei zwei verschiedene Ausführungsformen des Erfindungsgegenstandes dargestellt. Die Schottwand 6 des Adsorbers 1 ist mit ihrem unteren Rand unterhalb des Rostes 5 mit dem Behälter 1 verbunden und reicht mit ihrem oberen Rand bis in Höhe des oberen Randes der Adsorptionsmittelschüttung. Die Schottwand 7 des Adsorbers 2 ist mit ihrem oberen Rand oberhalb des Adsorptionsmittels 4 mit der Wand des Behälters 3 und mit ihrem unteren Rand mit dem Rost 5 verbunden. Es ist nicht erforderlich, das die Wände 6, 7 jeweils absolut dicht an der Wand der Behälter 3 anliegen, es genügt, wenn sie den Strömungsquerschnitt so stark verengen, daß nur mehr ein Teil der im übrigen Adsorber pro Flächeneinheit des Adsorptionsmittels strömenden Luft durch die Abschottung gelangt.

Die Adsorber 1, 2 weisen Zu- und Abführungseinrichtungen 8, 9 für Regeneriergas und Luft auf. Eine zusätzliche Abführungseinrichtung 21 für Regeneriergas ist unterhalb von Rost 5 in der Abschottung von Behälter 1, eine zusätzliche Zuführungseinrichtung 22 für Regeneriergas oberhalb des oberen Randes des Adsorptionsmittels 4 von Behälter 2 vorgesehen. Selbstverständlich werden in der Regel entweder nur Adsorber vom Typ des Adsorbers 1 oder nur Adsorber vom Typ des Adsorbers 2 in einer Anlage verwendet werden. Die in Figur 1 gezeigte Anordnung dient nur zur gleichzeitigen Veranschaulichung zweier verschiedener Ausführungsformen.

Die Funktionsweise dieser Anordnung ist folgende:

Die zu reinigende Luft wird bei 10 zugeführt und je nach Stellung der Schaltklappen 11, 12 über Adsorber 1 oder 2 geleitet. Beispielsweise ist Adsorber 1 in Betrieb, dann ist die Schaltklappe 11 geöffnet, Schaltklappe 12 geschlossen. In diesem Betriebszustand sind weiterhin die Schaltklappen 13, 15, 18 und 20 geschlossen, die Schaltklappen 14, 16, 17 und 19 sind geöffnet.

Die Luft gelangt über die Zu-/Abführungseinrichtung 9 in den Adsorber 1. Der größte Teil der Luft gelangt durch das zwischen den beiden Schottwänden 6 gelegene Adsorptionsmittel 4. Ein kleiner Teil der Luft gelangt über Undichtigkeiten bzw. einen stark verengten Strömungsquerschnitt an der Verbindungsstelle zwischen den Schottwänden 6 und der Behälterwand in die Abschottung und durchströmt das innerhalb der Abschottung befindliche Adsorptionsmittel. Dieser Teil der Luft verläßt den Adsorber 1 zusammen mit dem Hauptteil der Luft über die Zu-/Abführungseinrichtung 8 und wird bei 23 abgeführt. Aufgrund des verengten Eintrittsströmungsquerschnitts strömt in die Abschottung eine wesentlich kleinere Luftmenge pro Flächeneinheit des Adsorptionsmittels als außerhalb. Das im Bereich der Behälterwand gelegene Adsorptionsmittel ist somit wesentlich weniger beladen als das übrige Adsorptionsmittel.

Regeneriergas 24, beispielsweise unreiner Stickstoff aus einer Luftzerlegungsanlage, wird in erhitztem Zustand über die Schaltklappe 16 und die Zu-/Abführungseinrichtung 8 dem Adsorber 2 zugeführt, der im vorgehenden Schaltzyklus beladen worden war. Bei 25 wird ein Teil des Regeneriergases abgezweigt und über die zusätzlichen Zuführungseinrichtungen 22 direkt in die Abschottungen eingeleitet. Die beiden Teilströme des Regeneriergases sind so eingestellt, daß innerhalb und außerhalb der Abschottung pro Flächeneinheit des Adsorptionsmittels dieselbe Regeneriergasmenge zur Verfügung steht. Da aber erfindungsgemäß innerhalb der Abschottung weniger Luft durchgeführt worden war, ist in diesem Bereich das Verhältnis Regeneriergas zu Rohgas (Luft) größer als im übrigen Adsorber. Es macht daher nichts aus, wenn sich das Regeneriergas innerhalb der Abschottung an der Behälterwand abkühlt, da durch das vergrößerte Mengenverhältnis dennoch eine ausreichende Regenerierung gesichert ist. Die Schottwand 7 wird sich dagegen nur sehr wenig abkühlen; außerdem weist sie eine im Vergleich zur Behälterwand sehr geringe Wärmekapazität auf, so daß sich das innerhalb der Wände 7 strömende Regeneriergas kaum abkühlt. Das Adsorptionsmittel wird somit über den gesamten Adsorptionsbehälter gleichmäßig gut regeneriert.

Im nächsten Schaltzyklus werden die bisher geöffneten Schaltklappen geschlossen und umgekehrt. Die Luft strömt nun in den regenerierten Adsorber 2, wobei analog zum vorhergehenden Fall aufgrund von Undichtigkeiten bzw. eines stark verengten Strömungsquerschnitts zwischen der Schottwand 7 und der Behälterwand eine relativ geringe Luftmenge über das in der Abschottung befindliche Adsorptionsmittel strömt. Dem Adsorber 1 wird die gesamte Regeneriergasmenge über die Zu-/Abführungseinrichtung 8 zugeführt. Ein Teil des Regeneriergases verläßt den Adsorber 1 über die Zu-/Abführungseinrichtung 9, der restliche Teil verläßt den Adsorber 1 über die zusätzlichen Abführungseinrichtungen 21. Die beiden Teilströme sind wiederum so eingestellt, daß innerhalb und außerhalb der Abschottung pro Flächeneinheit des Adsorptionsmittels dieselbe Regeneriergasmenge über das Adsorptionsmittel 4 strömt. Da im vorhergehenden Schaltzyklus in der Abschottung weniger Luft geströmt ist als außerhalb, vergrößert sich auch hier das Verhältnis Regeneriergas zu Rohgas.

Im folgenden wird ein Zahlenbeispiel angegeben, das die Vorteile der Erfindung verdeutlichen soll:

In einem erfindungsgemäßen Adsorber sollen 100 000 Nm³/h Luft von 6 bar und 8°C getrocknet und von anderen Verunreinigungen, im wesentlichen Kohlendioxid, gereinigt werden. Für die Reinigung dieser Luftmenge wird eine Molsiebmenge von ca. 21 m³ benötigt. Bei einer angenommenen Schütthöhe von 0,7 m ergibt sich eine Querschnittsfläche von 30 m² für das Molsiebbett. Das Molsiebbett wird in einem liegenden Behälter untergebracht und weist eine Querschnittsfläche von beispielsweise 3,5 m mal 8,6 m auf. Allseitig wird nunmehr um diese Fläche eine zusätzliche Schüttung von 50 mm Breite eingebracht, so daß die Fläche des Molsiebbettes 3,6 m mal 8,7 m beträgt. Dies bedeutet eine Vergrößerung der Fläche und damit auch der Molsiebmenge um rund 4%. In den so ausgeführten Adsorber wird nun in der vorher beschriebenen Weise in einem Abstand von 50 mm von der Außenwand eine vertikale Abschottwand eingebracht. Die Abschottwand ist mit ihrem oberen oder unteren Rand auf einfache Weise, z. B. durch Punktschweißen, mit der Außenwand verbunden, wodurch an dieser Stelle ein stark verengter Strömungsquerschnitt entsteht. Absolute Dichtheit ist nicht erforderlich.

Zum Regenerieren des Adsorbers wird eine Regeneriergasmenge von etwa 20% der Luft, d. h. 20 000 Nm³/h, die auf etwa 150° C angewärmt ist, benötigt. Durch die Querschnittsverengung an der Abschottung wird erreicht, daß durch die innerhalb der Abschottung angeordnete Adsorptionsmittelschüttung, die 4% der Gesamtschüttung ausmacht, wesentlich weniger Luft, also z B. nur 1% der Luft strömt. In dem gewählten Zahlenbeispiel sind dies 1000 Nm³/h, d. h. bei 6 bar und 8°C rund 170 effektive Kubikmeter. Andererseits ist durch die zusätzliche Zu- oder Abführungseinrichtung für Regeneriergas am Eintritt oder am Austritt der Schottung gewährleistet, daß innerhalb der Abschottung dieselbe heiße Regeneriergasmenge pro Flächeneinheit wie in der Gesamtschüttung strömt. Dies bedeutet bei 4% von 20 000 Nm³/h eine Menge von 800 Nm³/h. Es ergibt sich, daß in der Randzone ein Verhältnis Regeneriergasmenge zu Rohgasmenge von 4,7 : 1 herrscht. Der weiter oben als Minimum angegebene Wert von 2 : 1, der bereits bei unangewärmtem Regeneriergas eine ausreichende Regenerierung gewährleistet, wird damit weit übertroffen, wobei beim erfindungsgemäßen Verfahren das Regeneriergas sogar angewärmt vorliegt. Selbst wenn also die gesamte Wärme, die im Regeneriergas enthalten ist, durch Anwärmung des Außenbehälters verloren geht, wird dennoch das im Randbereich angeordnete Adsorptionsmittel sicher regeneriert.

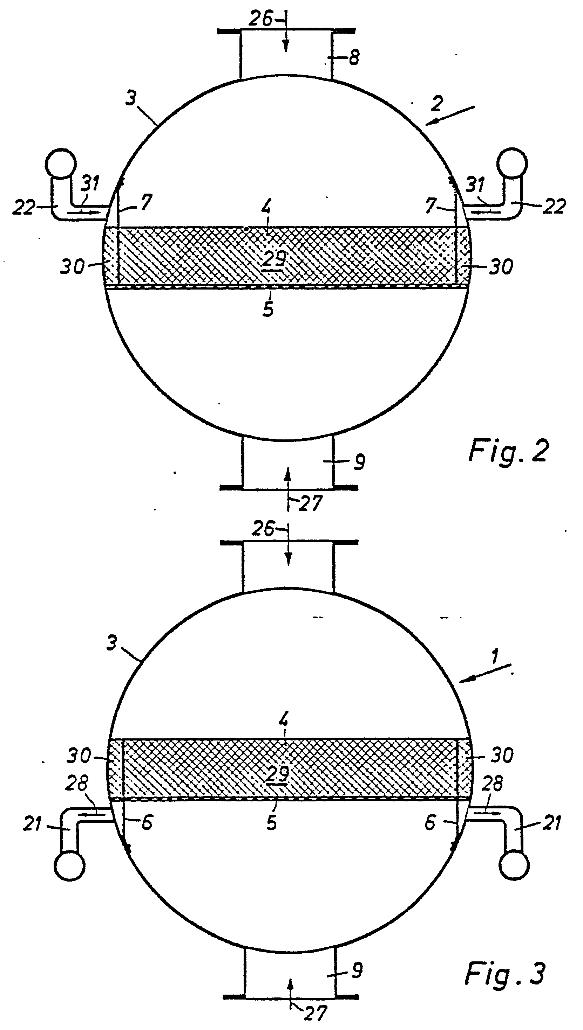

Die Figuren 2 und 3 zeigen Schnittdarstellungen erfindungsgemäßer Adsorber, wobei der Adsorber gemäß Figur 2 einem Adsorber vom Typ des Adsorbers 2 gemäß Figur 1 und derjenige gemäß Figur 3 einem Adsorber vom Typ des Adsorbers 1 gemäß Figur 1 entspricht. Für analoge Bauteile wurden daher dieselben Bezugszeichen verwendet. In aufeinanderfolgenden Schaltzyklen werden den Adsorbern 1, 2 abwechselnd Luft (Pfeil 27) und Regeneriergas (Pfeile 26, 31) zugeführt.

Im Fall von Figur 2 strömt aufgrund des verengten Strömungsquerschnitts, der an der Befestigungslinie der Abschottwand 7 mit dem Behälter 3 gebildet ist, durch das innerhalb der Abschottung angeordnete Adsorptionsmittel 30 relativ weniger Luft als durch das zwischen den beiden Abschottwänden 7 ruhende Adsorptionsmittel 29. Die Gesamtheit des Adsorptionsmittels ist weiterhin mit Bezugszeichen 4 bezeichnet. Beim Regeneriergas des Adsorbers 2 wird Regeneriergas über die Zu-/Abführungseinrichtung 8 zugeführt (Pfeil 26). Über die zusätzlichen Zuführungseinrichtungen 22 wird zusätzliches Regeneriergas zugeführt (Pfeil 31), wobei das über die Zu-/Abführungseinrichtung 8 zugeführte Regeneriergas über das Adsorptionsmittel 29 und das über die zusätzlichen Zuführungseinrichtungen 22 zugeführte Regeneriergas über das Adsorptionsmittel 30 strömt. Die Regeneriergasströme sind so eingestellt, daß in beiden Teilbereichen dieselbe Regeneriergasmenge pro Flächeneinheit des Adsorptionsmittels strömt.

Im Fall von Figur 3 strömt aufgrund des verengten Strömungsquerschnitts, der an der Befestigungslinie der Abschottung 6 mit dem Behälter 3 gebildet ist, durch das innerhalb der Abschottung angeordnete Adsorptionsmittel 30 relativ weniger Luft als durch das zwischen den beiden Abschottwänden 7 ruhende Adsorptionsmittel 29. Beim Regenerieren des Adsorbers 1 wird Regeneriergas ausschließlich über die Zu-/Abführungsöffnung 8 zugeführt. Ein Teil des Regeneriergases strömt über das Adsorptionsmittel 29 und verläßt den Adsorber über die Zu-/Abführungseinrichtung 9, der Rest des Regeneriergases strömt über das Adsorptionsmittel 30 und verläßt den Adsorber 1 über die zusätzlichen Abführungseinrichtungen 21 (Pfeile 28). Die beiden Teilströme sind so aufeinander eingestellt, daß in beiden Teilbereichen 29, 30 der Adsorptionsmittelschüttung 4 dieselbe Regeneriergasmenge pro Flächeneinheit des Adsorptionsmittels strömt.

Die gezeigten gegenständlichen Ausbildungen des Erfindungsgegenstandes stellen besonders vorteilhafte, jedoch nicht die einzigen Möglichkeiten zur Durchführung des erfindungsgemäßen Verfahrens dar. Es ist beispielsweise denkbar, daß das Verhältnis Regeneriergas zu Rohgas in der Randzone des Adsorbers durch Gasleitbleche, die entweder die Zufuhr von Regeneriergas in diesen Bereich erhöhen und/oder die Zufuhr von Rohgas zu diesem Bereich beschränken, oder durch Düsen, mit denen zusätzliches Regeneriergas in den Randbereich geführt wird, erhöht wird.

Die ausführlich beschriebene Ausführungsform mit den einseitig befestigten Abschottwänden weist jedoch den Vorteil auf, daß sie konstruktiv besonders einfach und preiswert ist und leicht hergestellt werden kann.

**Patentansprüche**

1. Verfahren zum Regenerieren eines abwechselnd von Rohgas und angewärmtem Regeneriergas durchströmten Adsorbers mit in einem Behälter angeordnetem Adsorptionsmittel, bei welchem Verfahren das Regeneriergas über das beladene Adsorptionsmittel geleitet wird, dadurch gekennzeichnet, daß im Adsorptionsmittel (4) das Verhältnis der Durchsatzmengen von Regeneriergas zu Rohgas im Bereich der Behälterwand größer als im übrigen Bereich eingestellt wird.

2. Verfahren nach Anspruch 1, dadurch gekennzeichnet, daß die Menge des über das im Bereich der Behälterwand befindliche Adsorptionsmittel (4) geleiteten Rohgases verringert wird.

3. Verfahren nach Anspruch 1 oder 2, dadurch gekennzeichnet, daß ein Teil des Regeneriergases getrennt vom restlichen Regeneriergas dem im Bereich der Behälterwand angeordneten Adsorptionsmittel (4) zugeführt oder von dem im Bereich der Behälterwand angeordneten Adsorptionsmittel (4) abgeführt wird.

4. Verfahren nach einem der Ansprüche 1 bis 3, dadurch gekennzeichnet, daß das Verhältnis Regeneriergasmenge zu effektiver Rohgasmenge im Bereich der Behälterwand mindestens zwei beträgt.

5. Adsorber zur Durchführung des Verfahrens nach einem der Ansprüche 1 bis 4 mit in einem Behälter angeordnetem Adsorptionsmittel sowie Zuführungs- und Abführungseinrichtungen für Rohgas und Regeneriergas, gekennzeichnet durch eine im Bereich der Behälterwand angeordnete Abschottung, die das im Randbereich befindliche von dem restlichen Adsorptionsmittel (4) abtrennt und die in Strömungsrichtung der Gase an der einen Seite offen und an der anderen Seite zumindest annähernd verschlossen ist, wobei in dem abgeschotteten Raum eine zusätzliche Zu- oder Abführungseinrichtung (21, 22) für Regeneriergas vorhanden ist.

6. Adsorber nach Anspruch 5, dadurch gekennzeichnet, daß eine Schottwand (7) mit ihrem oberen Rand oberhalb des Adsorptionsmittels (4) mit der Behälterwand und mit ihrem unteren Rand mit einem Rost (5), auf dem das Adsorptionsmittel (4) ruht, verbunden ist.

7. Adsorber nach Anspruch 5, dadurch gekennzeichnet, daß eine Schottwand (6) unterhalb des Adsorptionsmittels (4) mit der Behälterwand verbunden ist und sich mit ihrem oberen Rand bis oberhalb des Adsorptionsmittels (4) erstreckt.

## Claims

1. A process for regenerating an adsorber through which crude gas and heated regeneration gas alternately flows, and which comprises an adsorbent arranged in a container, in which process the regeneration gas is fed through the charged adsorbent, characterised in that, in the adsorbent (4), the ratio of the through-put amounts of regeneration gas to crude gas is set to be greater in the region of the container wall than in the remainder.

2. A process as claimed in Claim 1, characterised in that the quantity of crude gas fed through the adsorbent (4) located in the region of the container wall is reduced.

3. A process as claimed in Claim 1 or Claim 2, characterised in that a part of the regeneration gas is fed to the adsorbent (4) located in the region of the container wall, or is discharged from the adsorbent (4) located in the region of the container wall, separately from the remainder of the regeneration gas.

4. A process as claimed in one of Claims 1 to 3, characterised in that the ratio of the amount of regeneration gas to the effective amount of crude gas in the region of the container wall is at least two to one.

5. An adsorber for carrying out the process claimed in one of Claims 1 to 4, comprising adsorbent arranged in a container and supply and discharge means for crude gas and regeneration gas, characterised by a partition which is arranged in the region of the container wall and which separates the adsorbent (4) located in the border region from the remainder thereof and which, in the direction of flow of the gases, is open on one side and at least approximately closed on the other side, an additional supply or discharge means (21, 22) for regeneration gas being arranged in the partitioned-off space.

6. An adsorber as claimed in Claim 5, characterised in that a partition wall (7) is connected at its upper edge above the adsorbent (4) to the container wall, and at its lower edge to a grating (5) on which the adsorbent (4) rests.

7. An adsorber as claimed in Claim 5, characterised in that a partition wall (6) below the adsorbent (4) is connected to the container wall and the upper edge of which extends above the adsorbent (4).

## Revendications

1. Procédé de régénération d'un adsorbeur parcouru alternativement par un gaz brut et un gaz de régénération chauffé et comportant un agent d'adsorption disposé dans un récipient, procédé suivant lequel on fait passer le gaz de régénération sur l'agent d'adsorption chargé et est caractérisé en ce que, dans l'agent d'adsorption (4), la proportion du débit de gaz de régénération par rapport au gaz brut est réglée à une valeur supérieure dans la zone de la paroi du récipient que dans les zones restantes.

2. Procédé selon la revendication 1, caractérisé en ce que la quantité de gaz brut passant sur l'agent d'adsorption (4) se trouvant dans la zone de la paroi de récipient, ait diminuée.

3. Procédé selon l'une des revendications 1 ou 2, caractérisé en ce qu'une partie du gaz de régénération est introduite, séparément du reste du gaz de régénération, dans l'agent d'adsorption (4) disposé dans la zone de la paroi de récipient ou bien est déchargée de l'agent d'adsorption (4) disposé dans la zone de la paroi de récipient.

4. Procédé selon l'une des revendications 1 à 3, caractérisé en ce que la proportion de la quantité de gaz de régénération par rapport à la quantité effective de gaz brut dans la zone de la paroi de récipient est au moins égale à deux.

5. Adsorbeur pour la mise en oeuvre du procédé selon l'une des revendications 1 à 4, comportant un agent d'adsorption disposé dans un récipient ainsi que des dispositifs d'admission et de décharge de gaz brut et de gaz de régénération, caractérisé en ce qu'il est prévu un cloisonnement disposé dans la zone de la paroi de récipient, qui sépare l'agent d'adsorption (4) se trouvant dans la zone de bord du reste dudit agent d'adsorption et qui est, selon la direction d'écoulement du gaz, ouvert d'un côté et fermé au moins approximativement de l'autre côté, et en ce qu'il est prévu dans le volume cloisonné un dispositif additionnel d'admission ou de décharge (21, 22) pour le gaz de régénération.

6. Adsorbeur selon la revendication 5, caractérisé en ce qu'une paroi de cloisonnement (7) est reliée par son bord supérieur, au-dessus de l'agent d'adsorption (4) avec la paroi de récipient et par son bord inférieur avec une grille (5) sur laquelle repose l'agent d'adsorption (4).

7. Adsorbeur selon la revendication 5, caractérisé en ce qu'une paroi de cloisonnement (6) est reliée en-dessous de l'agent d'adsorption (4) avec la paroi de récipient et s'étent par son bord supérieur jusqu'au-dessus de l'agent d'adsorption (4).

Fig.1

0 045 929

Fig. 2

Fig. 3